(19) Europäisches Patentamt
European Patent Office
Office européen des brevets

(11) EP 0 677 172 B1

# (12) EUROPÄISCHE PATENTSCHRIFT

(45) Veröffentlichungstag und Bekanntmachung des Hinweises auf die Patenterteilung:
**01.03.2000 Patentblatt 2000/09**

(21) Anmeldenummer: **94904608.0**

(22) Anmeldetag: **29.12.1993**

(51) Int. Cl.[7]: **G01S 13/93**, G01S 13/34, G01S 13/58, G01S 13/28

(86) Internationale Anmeldenummer:
**PCT/EP93/03714**

(87) Internationale Veröffentlichungsnummer:
**WO 94/16340 (21.07.1994 Gazette 1994/17)**

(54) **COMPUTERISIERTES RADARVERFAHREN ZUR MESSUNG VON ABSTÄNDEN UND RELATIVGESCHWINDIGKEITEN ZWISCHEN EINEM FAHRZEUG UND VOR IHM BEFINDLICHEN HINDERNISSEN**

COMPUTERISED RADAR PROCESS FOR MEASURING DISTANCES AND RELATIVE SPEEDS BETWEEN A VEHICLE AND OBSTACLES IN FRONT OF IT

PROCEDE INFORMATISE FAISANT APPEL A UN RADAR, POUR MESURER LES DISTANCES ET LES VITESSES RELATIVES ENTRE UN VEHICULE ET DES OBSTACLES SE TROUVANT EN FACE DE LUI

(84) Benannte Vertragsstaaten:
**ES FR GB IT**

(30) Priorität: **31.12.1992 DE 4244608**

(43) Veröffentlichungstag der Anmeldung:
**18.10.1995 Patentblatt 1995/42**

(60) Teilanmeldung:
**99106444.5 / 0 939 322**

(73) Patentinhaber:
**Rockwell International Corporation
Anaheim California 92803-3105 (US)**

(72) Erfinder:
• **LISSEL, Ernst**
**D-38442 Wolfsburg (DE)**
• **ROHLING, Hermann**
**D-38304 Wolfenbüttel (DE)**

• **PLAGGE, Wilfried**
**D-38312 Ohrum (DE)**

(74) Vertreter:
**Wagner, Karl H., Dipl.-Ing. et al
WAGNER & GEYER
Patentanwälte
Gewürzmühlstrasse 5
80538 München (DE)**

(56) Entgegenhaltungen:
**WO-A-92/11543          FR-A- 2 255 610
GB-A- 2 248 359**

• **IEEE 1990 INTERNATIONAL RADAR CONFERENCE, 7. Mai 1990, ARLINGTON, USA Seiten 589 - 594, XP131221 LEMIEUX ET AL. 'ANALYSIS OF FSK/PSK MODULATED RADAR SIGNALS USING COSTAS ARRAYS AND COMPLEMENTARY WELTI CODES'**

**Beschreibung**

Die Erfindung betrifft ein computerisiertes Radarverfahren gemäß dem Oberbegriff des Hauptanspruchs.

Die Radartechnik hat zur Messung von Abständen und Relativgeschwindigkeiten bislang primär im Luftverkehr Anwendung gefunden. Dort geht es um die Erfassung einer Abstandsbereichs zwischen einigen hundert Metern bis zu vielen Kilometern. Demgegenüber erfordern die besonderen Verhältnisse im Straßenverkehr die Erfassung eines Abstandsbereichs von weniger als einem Meter bis zu über hundert Metern. Darüber hinaus müssen entsprechende fahrzeugautarke Abstandswarn- und Sicherungsanlagen angesichts der üblicherweise gegenüber Luftverkehrsstrecken unübersichtlichen und komplizierten Straßenszenen relativ viele Hindernisse gleichzeitig mit möglichst vielen charakterisierenden Daten erfassen können. Grundsätzlich ist die Erfassung von drei Daten, nämlich Abstand zwischen Fahrzeug und Hindernis, Relativgeschwindigkeit zwischen Fahrzeug und Hindernis (mittels des Doppler-Effekts) und Amplitude des am Hindernis reflektierten Sendesignals zur Gewinnung einer Aussage über die Größe des Hindernisses erwünscht.

Eine weitere Anforderung an ein fahrzeugautark durchzuführendes Radarverfahren besteht in einer kostengünstigen Realisierung, da andernfalls ein Serieneinsatz wirtschaftlich nicht zu vertreten ist. Wie im Rahmen der Erfindung vorgenommene Untersuchungen gezeigt haben, sind bekannte Radarverfahren, die eine gleichzeitige Abstands- und Relativgeschwindigkeitsmessung und die Erfassung mehrerer Hindernisse gestatten (Kleinheubacher Berichte 1992 Band 35, Seiten 731 bis 740) demgegenüber nur mit extrem hohem Aufwand zu realisieren, da durch hohe Frequenzsteigungen hohe Differenzfrequenzen entstehen und die zu verarbeitende Bandbreite (im hohen MHz-Bereich) für kommerzielle Signalprozessoren zu groß ist.

Der Erfindung liegt demgemäß die Aufgabe zugrunde, ein gattungsgemäßes computerisiertes Radarverfahren zu schaffen, das für mehrere Hindernisse gleichzeitig die Abstände, die Relativgeschwindigkeiten und die Amplitude des reflektierten Signals als Maß für die Größe der Hindernisse zu erfassen gestattet.

Die erfindungsgemäße Lösung dieser Aufgabe besteht in den kennzeichnenden Merkmalen des Hauptanspruchs, eine vorteilhafte Ausund Weiterbildung des erfindungsgemäßen Verfahrens beinhaltet der Unteranspruch. Die weiteren Ansprüche beschreiben gleichsam Kalibrierverfahren, die mit besonderem Vorteil im Rahmen des Verfahrens nach dem Hauptanspruch, aber auch bei anderen gattungsgemäßen Verfahren angewendet werden können.

Bei dem erfindungsgemäßen, mittels eines kommerziellen Signalprozessors ohne Eingriff des Menschen durchzuführenden Radarverfahren werden also nach einer an sich bekannten Methode (Reflexion von Radarsignalen) ermittelte Meßsignale in Gestalt der reflektierten Sendesignale gezielt verändert, und zwar nach Gesetzmäßigkeiten, die mit einfachen Einrichtungen die Erfüllung der in der Aufgabenstellung formulierten Anforderungen sicherstellen. Dabei beinhaltet das Verfahren sowohl neue Modulationsschritte als auch eine neue Auswertung der empfangen reflektierten Signale. Eine Besonderheit der Modulation besteht darin, daß die Radarsignale aus Bursts, also frequenzkonstanten Stücken, zusammengesetzt sind, und zwar in einer Anzahl, die durch die gewünschte Genauigkeit der Messung bestimmt ist. Als sinnvoll erweist sich während der ersten drei Messungen eine Anzahl von 128 Bursts, dagegen für die vierte Messung eine Anzahl von 36 Bursts. Die zeitliche Länge eines solchen Bursts beträgt zweckmäßigerweise etwa 20µs; nach Ablauf dieser Zeit sind sämtliche am Hindernis reflektierten Signale detektiert, d. h. das Empfangssignal des betreffenden Sendesignal-Bursts befindet sich im eingeschwungenen Zustand, da das gesendete Signal rein sinusförmig war. Dies ermöglicht, am Ende jedes empfangenen reflektierten Bursts einen komplexen Abtastwert zu entnehmen, der die eingeschwungene Phase des Reflexionslaufzeitprofils enthält. Bei einer Burstlänge von 20µs entspräche dies einer Abtastfrequenz von 50kHz, die in vorteilhafter Weise also relativ niedrig ist.

Wie im Kennzeichen des Hauptanspruchs angegeben, sieht das erfindungsgemäße Verfahren bei der Verarbeitung der empfangenen reflektierten Signale insgesamt vier Verfahrensschritte oder Messungen vor. Dabei dienen die drei ersten Messungen der Erfassung der Hindernisse, gegeben durch die Zahl der Sendesignal-Bursts und die Zahl der Abstands- und Relativgeschwindigkeits-Fenster, während in der vierten Messung aus den in den drei ersten Messungen ermittelten potentiellen Hindernissen die - bei der Auswertung entstandenen - Geister- oder Scheinhindernisse ausgesondert werden, so daß anschließend nur die Daten für tatsächlich existierende Hindernisse weiter verarbeitet werden.

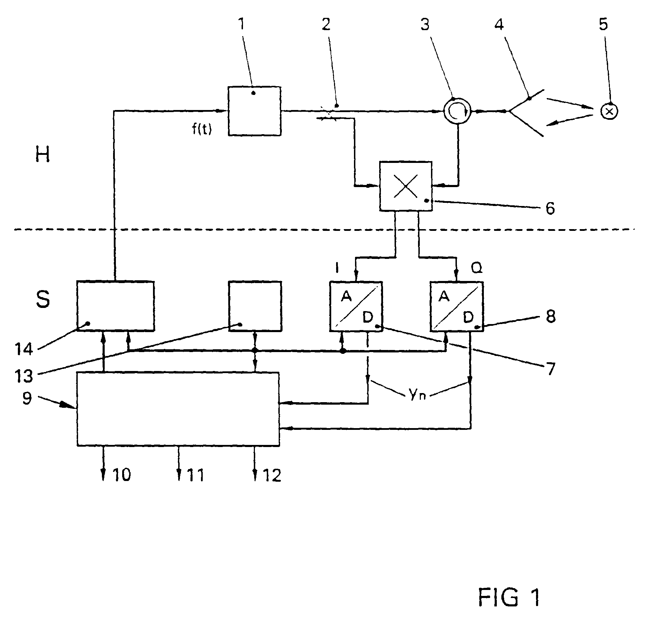

Ein Ausführungsbeispiel der Erfindung wird im folgenden anhand der Zeichnung erläutert, deren Figur 1 den grundsätzlichen, an sich bekannten Aufbau einer Radarvorrichtung zeigt, wie sie auch für das erfindungsgemäße Verfahren Einsatz finden kann, während die weiteren Figuren Kurven und Diagramme zur Erläuterung verschiedener Verfahrensschritte und Kalibrierverfahren zeigen.

Betrachtet man zunächst das Blockschaltbild nach Figur 1, so gliedert sich die Vorrichtung in den Hochfrequenz- oder Mikrowellenteil H und den Signalverarbeitungsteil S. Der spannungsgesteuerte Oszillator (VCO), der in üblicher Weise ein kontinuierliches Mikrowellensignal (continuous wave) erzeugt, dessen Frequenz beispielsweise mittels einer Varactordiode über mehrere 100MHz proportional zu einer Steuer-Modulationsspannung f(t) verändert werden kann, dient bei dem erfindungsgemäßen Verfahren zur Erzeugung jeweils frequenzkonstanter Sendesignal-Bursts, die über den Koppler 2 und den Zirkulator 3, dessen Arbeitsrichtung durch den Pfeil angedeutet ist, zur Sende- und Empfangsantenne 4 gelangen. Bei 5 ist ein auf der Fahrbahn vor dem mit dieser Vorrichtung ausgerüsteten Fahrzeug befindliches Hindernis bezeichnet. Die Wege der Sendesignal-Bursts und der reflektierten Signale sind durch Pfeile angedeutet.

Der Zirkulator 3 trennt die Sendesignale von den empfangenen reflektierten Signalen, so daß nur die reflektierten Signale zu dem in der Figur rechten Eingang des Quadraturmischers 6 gelangen, während seinem in der Figur linken Eingang durch den Koppler 2 ausgekoppelte Sendesignale zugeführt werden. Der Mischer 6 bildet die Differenzfrequenz zwischen Sende- und Empfangssignal als Inphasesignal I und Quadraturphasesignal Q, die beide zunächst in analoger Form vorliegen, d. h. als sinusförmige Zeitsignale. In den Analog-Digital-Wandlern 7 und 8 erfolgt eine Umsetzung in Digitalsignale $y_n$, die dem - in seiner Arbeitsweise noch zu beschreibenden - digitalen Signalprozessor 9 zugeführt werden, an dessen Ausgängen 10, 11 und 12 dann Signale für den jeweiligen Abstand, die Relativgeschwindigkeit und die Amplitude, d. h. die Hindernisgröße, abgegriffen werden können.

Der Signalprozessor 9, dem der Taktgeber 13 zugeordnet ist, dient seinerseits über den Codegenerator 14 zur Erzeugung der Steuerspannung f(t) für den Oszillator 1.

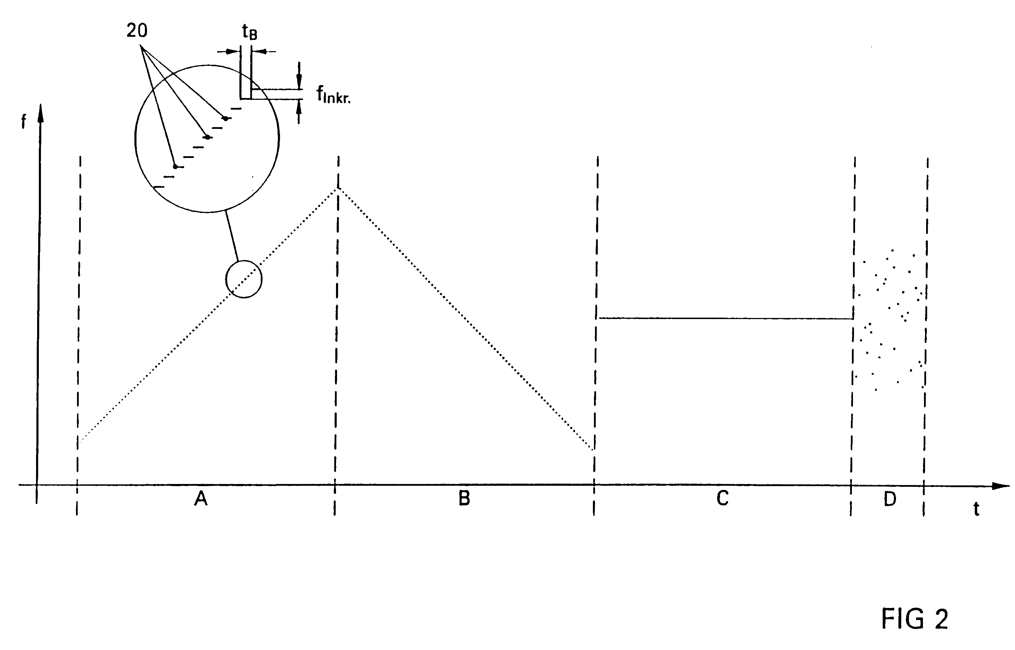

Bei der folgenden Beschreibung des erfindungsgemäßen Verfahrens wird als Beispiel die Forderung angenommen, ein Abstandsbereich von 128 Metern solle mit einer Auflösung von einem Meter erfaßt werden. Ebenso ist eine Unterteilung des zu erfassenden Relativgeschwindigkeits-Bereichs in 128 Fenster angenommen. Damit ergibt sich also an sich die Notwendigkeit der Abarbeitung von 128 x 128 Fenstern, was nicht nur zu einem kaum vertretbaren Rechenaufwand führen würde, sondern auch zu einer relativ langen Rechenzeit, jedenfalls oberhalb 10msec. Aus diesem Grunde sieht das erfindungsgemäße Verfahren gemäß Figur 2, in der die Sendefrequenz f über der Zeit t aufgetragen ist, drei Messungen A, B, und C vor, in denen die Hindernisse erfaßt werden, sowie eine anschließende vierte Messung D, die der Aussortierung von dabei erzeugten Scheinhindernissen dient.

Wie bereits ausgeführt, arbeitet das erfindungsgemäße Verfahren mit Erzeugung jeweils frequenzkonstanter Sendesignal-Bursts, die in den Messungen A, B und C Verwendung finden. In Figur 2 ist vergrößert eine Folge derartiger Bursts 20 dargestellt, deren Dauer $t_B$ in dem angenommenen Beispiel 20μsec beträgt und die in diesem Beispiel Frequenzinkremente $f_{Inkr.}$ von 1MHz definieren. Wie ebenfalls bereits erläutert, ermöglicht die Verwendung derartiger Sendesignal-Bursts 20 eine Auswertung der reflektierten Signale bei eingeschwungener Phase.

Alle vier Messungen A, B, C und D erfolgen sequentiell, d. h. in der Vorrichtung nach Figur 1 erfolgt zunächst für alle 128 Bursts 20 die Messung A, dann entsprechend Messung B, und so fort. Während Messung A wird der Oszillator 1 durch eine entsprechende Steuerspannung f(t) so angesteuert, daß er, ausgehend von einer Mindestfrequenz von in diesem Beispiel 77 GHz, eine linear inkremental auf einen Maximalwert von in diesem Beispiel 77,128 GHz ansteigende Folge von Bursts 20 erzeugt. Während Messung B erzeugt der Qszillator 1 dagegen, nunmehr ausgehend von der Maximalfrequenz, eine lineare Folge von Bursts mit entgegengesetzter Steigung, so daß schließlich wieder die Frequenz von 77 GHz erreicht wird. Demgegenüber erfolgt während Messung C die Aussendung von 128 Bursts, die alle dieselbe Frequenz besitzen.

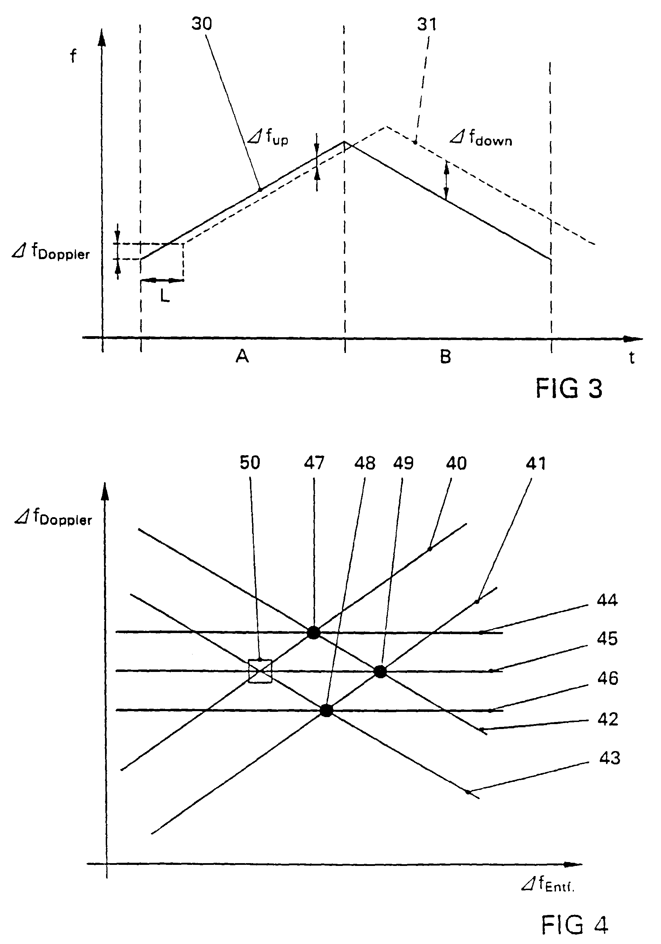

Die während der ersten drei Messungen A, B und C empfangenen reflektierten Signale werden jeweils mit einem Blackman-Cosinusfenster gewichtet und in eine Fouriertransformation (FFT) eingegeben. Wie im einzelnen in "Introduction to Radar Systems" von M. I. Skolnik, 1962, Seite 88, dargelegt, ermöglichen die beiden ersten Messungen A und B für ein Hindernis, das sich durch eine hohe Reflexionsintensität hervorhebt, die gleichzeitige Messung von Anstand und Relativgeschwindigkeit. In Figur 3 sind in einem Frequenz (f)-Zeit (t)-Diagramm die Verläufe 30 der Sendesignale und 31 der empfangenen reflektierten Signale wiedergegeben. Mit L ist die Echolaufzeit, mit $\Delta f_{Doppler}$ die Dopplerfrequenz bezeichnet. Daraus sowie aus den Frequenzdifferenzen $\Delta f_{up}$ und $\Delta f_{down}$ ergeben sich für die Relativgeschwindigkeit und den Abstand bzw. die Entfernung die Beziehungen

$$\Delta f_{Doppler} = (\Delta f_{down} - \Delta f_{up})/2$$

$$\Delta_{Entf} = (\Delta f_{down} + \Delta f_{up})/2.$$

Messung C trägt nun der Tatsache Rechnung, daß die Messungen A und B für mehr als ein Hindernis infolge Mehrdeutigkeit der mathematischen Beziehungen nicht brauchbar sind.

Jede nach den drei Messungen A, B und C mit den dabei empfangenen reflektierten Signalen ausgeführte Fouriertransformation liefert in dem angenommen Beispiel 128 "Spektralwerte". Dabei sind an den Ausgangszellen der Fouriertransformation auftretende herausragende Maxima durch Reflexionen von Hindernisen begründet. Bezüglich der ersten und zweiten Messung gelten die oben im Zusammenhang mit Figur 3 angegebenen Beziehungen; in Messung C sind die durch die Maxima angezeigten Frequenzen gleich den Doppelfrequenzen der Hindernisse.

In einem Geschwindigkeits-Entfernungs-Diagramm (Figur 4) werden die in den drei Messungen A, B und C ermittelten Frequenzen durch Scharen sich schneidender Geraden gekennzeichnet, die jeweils potentielle Hindernispositionen darstellen. Die Geraden 40 und 41 beziehen sich auf die erste Messung A, die Geraden 42 und 43 auf die zweite Messung B und die Geraden 44, 45 und 46 auf die dritte Messung C. Nach Verknüpfung der Messergebnisse der ersten drei Messungen kommen als potentielle Hindernisse nur noch die Schnittpunkte der Geraden 40 bis 46 in Frage. Dabei kann es sich um tatsächliche Hindernisse 47, 48 und 49 oder aber um ein Geister-Hindernis 50 handeln, das durch die Verknüpfung hervorgerufen wurde. Die drei ersten Messungen A, B und C liefern demgemäß Daten für eine definierte, gegenüber der Zahl der ursprünglichen Inkremente verringerte Anzahl potentieller Hindernisse, und mittels der vierten Messung D muß nun eine Möglichkeit zum Aussortieren der Geisterhindernisse geschaffen werden.

Im Prinzip geschieht dies dadurch, daß die durch die Messungen A, B und C als Schnittpunkte ermittelten potentiellen Hindernisse mittels einer definierten Frequenzmodulation oder Frequenzcodierung daraufhin überprüft werden, ob es sich um tatsächliche Hindernisse oder Geisterhindernisse handelt. Dabei werden mittels des Oszillators 1 zeitlich aufeinanderfolgende Bursts mit Frequenzen $f_n$ gemäß der Beziehung

$$f_n = f_T + f_{Inkr.} \cdot (A^n \mathrm{mod}(P))$$

mit

n =        O...N - 1, worin N = P - 1 und P = Primzahl,
A =        natürliche Zahl, die für die jeweilige Länge N so gewählt ist, daß N unterschiedliche Koeffizienten entstehen;
$f_T$ =        Trägerfrequenz des Oszillators,
$f_{Inkr.}$ =        Frequenzinkrement
mod =        Modulo-Operator

erzeugt, und am Ende jedes - jeweils einem der Koeffizienten $(A^n \mathrm{mod}(P))$ zugeordneten - reflektierten Bursts wird als viertes Empfangssignal ein komplexer Abtastwert

$$y_n = \sum_i k_i \cdot e^{j\psi;n}.$$

mit

i =        Zahl der Hindernisse,

$\phi i;n =$        $2\pi f_{Inkr.} \dfrac{Ri}{\frac{c}{2}} (A^n \mathrm{mod}(P)) + 2\pi n \dfrac{v_i f_T}{\frac{c}{2} f_A}$ = eingeschwungener Phasenwert des Hindernisses i,

c =        Lichtgeschwindigkeit,
$R_i$ =        Entfernung des Zieles Hindernisses i;
$v_i$ =        Relativgeschwindigkeit des Hindernisses i,
$f_T$ =        Trägerfrequenz des Oszillators,
$f_A$ =        Abtastfrequenz,
$k_i$ =        Amplitude

berechnet.

Anschließend erfolgt ein Vergleich der den Hindernissen in der vierten Messung zugeordneten Phasen $\phi_{i;n}$ mit den Phasen der Schnittpunkte 47, 48, 49 und 50 im Relativgeschwindigkeits-Abstands-Diagramm der Figur 4.

Zur Erleichterung des Verständnisses wird für die Frequenzcodierung $f_n$ folgendes Zahlenbeispiel angenommen:

P = 37; N = P - 1 = 36; A = 5;

$f_T$ = 77GHz; $f_{Inkr.}$ = 1MHz.

Die einzelnen Koeffizienten $(A^n \mathrm{mod}(P))$ lauten dann: 1; 5; 25; 14; 33; 17; 11; 18; 16; 6; 30; 2; 10; 13; 28; 29; 34; 22; 36; 32; 12; 23; 4; 20; 26; 19; 21; 31; 7; 35; 27; 24; 9; 8; 3; 15.

Diese Koeffizienten decken alle natürlichen Zahlen zwischen 1 und 36 ab und sind alle verschieden voneinander. Multipliziert mit dem Frequenzsprung-Inkrement, hier 1MHz, ergeben sie den in Figur 2 im Bereich D dargestellten Modulationsverlauf: Für jeden Koeffizienten erhält man einen frequenzkonstanten Burst und am Ende jedes Bursts einen Empfangsabtastwert in Form von in Figur 1 mit I und Q bezeichneten Signalen. In Abweichung von den in den ersten drei Messungen A, B und C erhaltenen Bursts bilden die in der vierten Messung D erhalten Bursts jedoch keine lineare Burstfolge.

Die definierte Folge der Koeffizienten ($A^n$mod(P)) hat nun besondere mathematische Eigenschaften, die wesentliche Voraussetzungen für die Anwendung im Radarsystem bilden:

1. Multipliziert man die Folge mit einer beliebigen ganzen Zahl, ausgenommen 0, und bringt die Ergebnisfolge durch Modulorechnung wieder in den Bereich 1...N, so ergibt sich eine zyklisch verschobene Version der Folge. Betrachtet man das obige Beispiel, so entsteht, wenn die dort angegebene Folge mit der zahl 2 multipliziert und anschließend durch mod(37) in den Bereich 1...36 gebracht wird, die Folge 2; 10; 13; 28; 29;..., die eine zyklisch verschobene Version der ursprünglichen Folge ist.

2. Subtrahiert man von der Koeffizientenfolge eine zyklisch verschobene Version dieser Folge und bringt das Ergebnis durch Modulorechnung wieder in den Bereich 1...N, so entsteht eine andere zyklisch verschobene Version der Folge. Im Beispiel: Von der Folge 1; 5; 25; 14; 33;... wird die Folge 2; 10; 13; 28; 29;... subtrahiert. Dadurch entsteht die zyklisch verschobene Version 36; 32; 12; 23; 4;....

Wie bereits aus dem oben angegebenen Bildungsgesetz für das Empfangssignal $y_n$ der vierten Messung D ersichtlich, setzt sich dieses Empfangssignal aus der Überlagerung mehrerer Reflexionsvorgänge an Hindernissen zusammen, die mit unterschiedlichen Reflexionsamplituden $k_i$ gewichtet empfangen werden und die jeweils die eingeschwungenen Phasenwerte $\phi_{i;n}$ über der diskreten Zeitachse n enthalten. Setzt man in die Beziehung für $\phi_{i;n}$ die Werte des obigen Zahlenbeispiels ein und nimmt eine Abtastfrequenz von 50kHz an, so ergibt sich

$$\phi_{i;n} = \frac{2\pi}{37} \cdot \frac{R_i}{4\,\text{Meter}} \cdot (5^n \text{mod}(37)) + 2\pi n \cdot \frac{v_i[\text{km/h}]}{360\,\frac{\text{km}}{\text{h}}}$$

Der erste, entfernungs- oder abstandsbedingte Summand erzeugt somit in der komplexen Ebene verteilte Phasen. Da der Abstand als Multiplikator in diese Phasen eingeht und durch die zyklische Periodizität der Phase bezüglich 360 Grad ein Modulo-Effekt erzeugt wird, entsteht gemäß der oben unter 1. definierten Voraussetzung je nach Abstand eine zyklisch verschobene Version der Phasenfolge.

Die mittels der ersten drei Messungen A, B und C gewonnenen potentiellen Hindernisse werden nun zu einer Folge mit abnehmenden Reflexionsamplituden $k_i$ geordnet und zwecks Aussortierung der Geisterhindernisse mit einem zu dem angenommenen Abstands-Geschwindigkeits-Vektor passenden Korrelator multipliziert; anschließend werden die Produkte addiert:

Zunächst wird der Korrelationswert W für das Hindernis mit der größten Reflexionsamplitude errechnet:

$$W = \sum_{n=O}^{N-1} y_n \cdot e^{-j\phi_{i;n}}$$

mit i = 0 (amplitudenstärkstes Ziel).

Gemäß dieser Korrelationsbeziehung wird also mit dem Empfangssignal $y_n$ der vierten Messung D eine konjugiert komplexe Folge multipliziert, die zu dem potentiellen Hindernis mit der stärksten Reflexionsamplitude paßt. Das bedeutet, daß die entsprechende Phasenfolge subtrahiert wird. Nur bei einem tatsächlichen Hindernis entsteht ein hoher Korrelationswert W, da nur dann die Empfangsphasenfolge $y_n$ durch die Korrelation zu einer phasenkonstanten Folge rückgängig gemacht wird. Bei einem Geisterhindernis liegt im Empfangssignal $y_n$ keine derartige Phasenfolge vor, und die Wichtung mit der Korrelation erzeugt wegen weiterer potentieller Hindernisse zyklisch verschobene Versionen der Phasenfolge gemäß der oben unter 2. angegebenen mathematischen Eigenschaft. Die Summe solcher phasengestreuter Vektoren, d. h. der zugehörige Korrelationswert W, ist niedrig, so daß Scheinhindernisse als solche erkannt und aussortiert werden können.

In dem Diagramm nach Figur 4 wird also der Schnittpunkt 50 aussortiert, und die verbleibenden Schnittpunkte 47, 48 und 49 werden als realen Hindernissen zugeordnet weiterbehandelt. Dies geschieht in der Weise, daß iterativ jeweils nach Ermittlung eines Schnittpunktes mit hohem Korrelationswert W, also hier der Schnittpunkte 47, 48 und 49, auf das zugehörige fiktive vierte Empfangssignal $\frac{W}{N} e^{j\phi i;n}$ rückgeschlossen und dieses von dem Empfangasignal $y_n$ der vierten Messung subtrahiert wird:

$$y_{n_{neu}} = y_n - \frac{W}{N} e^{j\phi i;n}$$

für alle n = O...N - 1.

Diese Differenz enthält also nur noch die reflektierten Signale von dem zweitgrößten Ziel an abwärts. Dieses Vorgehen wird, wie gesagt, iterativ wiederholt, so daß anhand dieses neuen Empfangssignals $y_{n_{neu}}$ wiederum eine Korrelationsüberprüfung für das nunmehr größte (also insgesamt zweitgröße) Ziel durchgeführt wird; diese Vorgehensweise wiederholt sich entsprechend.

Schlagwortartig kann man also sagen, daß für reale Hindernisse die dem zugehörigen Schnittpunkt in dem Diagramm nach Figur 4 zugeordnete Phase des Empfangssignals nach Art einer umgekehrten Fouriertransformation berechnet und mit dem Ergebnis aus der vierten Messung D verglichen wird. Da komplexe Werte vorliegen, erfolgt diese Überprüfung nach einer Korrelationsfunktion; die Korrelationswerte haben nur dann beispielsweise das Ergebnis 36, wenn ein echtes Hindernis vorliegt.

Nach der beschriebenen iterativen Überprüfung aller aus den Messungen A, B und C ermittelten potentiellen Hindernisse stehen nach der vierten Messung D die tatsächlichen Hindernisse mit hoher Detektionssicherheit zur Verfügung; die Fehlalarmraten bezüglich Scheinhindernissen sind extrem gering.

Grundsätzlich wäre es möglich, allein mit dem vierten Verfahrensschritt D Abstände und Relativgeschwindigkeiten auch bei Vorhandensein von mehreren Hindernissen zu bestimmen. Bei einer hinreichend großen Auflösung würde sich jedoch eine derart lange Rechenzeit ergeben, daß eine Realtime-Anwendung des Verfahrens nicht möglich wäre. Aus diesem Grunde wird durch die ersten drei Verfahrensschritte A, B und C eine Vorauswahl der potentiellen Hindernisse getroffen, und auf die so reduzierte Zahl der vierte Verfahrensschritt D angewendet. Das Ergebnis ist ein Verfahren, das mit Rechnern üblicher Kapazität auskommt und eine sichere Detektierung von Hindernissen mit geringer Auswertezeit garantiert.

Zur weiteren Erhöhung der Genauigkeit kann das im folgenden beschriebene Kalibrierverfahren Einsatz finden. Da nämlich der Quadraturmischer 6 zur Erzeugung eines komplexen Signals I, Q zwei Mischer enthält, kann dieses Signal im wesentlichen durch zwei Effekte verfälscht sein, nämlich einen durch ein Übersprechsignal bedingten "Offsetfehler" und durch einen "Quadraturkomponentenfehler".

Im folgenden werden die Entstehung und die Kompensation des Offsetfehlers beschrieben: Die Amplitude des in den Quadraturmischer 6 eingespeisten Sendesignals und damit die Ansprechempfindlichkeit seiner Mischerdioden hängt von der jeweiligen Frequenz, eingestellt durch die Steuerspannung f(t), ab, so daß auch das Sendesignal direkt am Ausgang des Quadraturmischers 6 anliegt.

Dieses "Übersprechsignal" ist im Vergleich zum eigentlichen Empfangssignal (also dem reflektierten Signal) extrem stark, so daß die zu detektierenden Ziele oder Hindernisse gleichsam verdeckt werden. Der Pegelunterschied zwischen beiden Signalarten kann dabei je nach Größe und Entfernung der Ziele 40...100 dB betragen. Das "Übersprechsignal" wird hier als "Offsetfehler" bezeichnet, da es bei einer bestimmten Frequenz als weitgehend stationärer Offset des Ausgangssignals an einer Mischerdiode auftritt.

Der Schwankungsbereich des definierten Offsets umfaßt nur einen geringen Amplitudenbereich; zudem besitzen die Schwankungen eine große Zeitkonstante (einige Minuten), während das dem Offset überlagerte Empfangssignal bei einer betrachteten Frequenz von Messung zu Messung einen stochastischen Charakter hat. Daher kann der Offsetfehler durch Mittelwertbildung einer großen Anzahl von reflektierten Signalen bei jeweils derselben Frequenz sehr genau bestimmt werden. Dieser Vorgang vollzieht sich vorteilhafterweise im laufenden Betrieb des Radarsystems. Ist der Offsetfehler hinreichend bekannt, kann er für jede Frequenz korrigiert werden, indem er einfach vom Mischer-Ausgangssignal I, O subtrahiert wird.

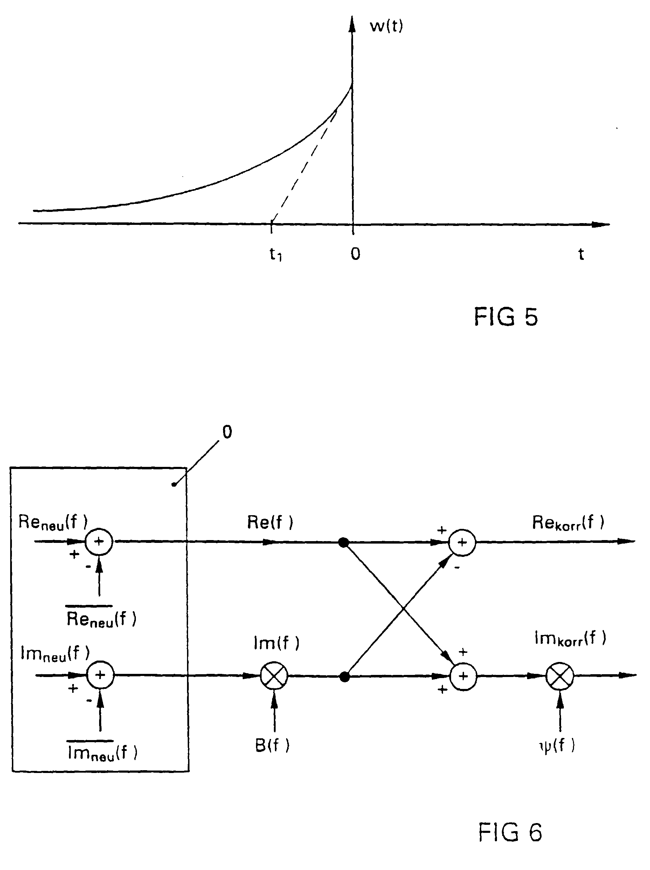

Die Mittelwertbildung der reflektierten Signale einer bestimmten Frequenz erfolgt vorteilhafterweise nicht durch das arithmetische Mittel, sondern durch eine exponentiell abklingende Vergangenheitsbewertung w(t), die in Figur 5 über der Zeit t dargestellt ist (der Abszissenwert t1 bedeutet mehrere Minuten). Der durch eine solche Vergangenheitsbewertung berechnete Mittelwert besitzt gegenüber dem arithmetischen Mittel im wesentlichen drei Vorteile: Zum einen kann der errechnete Mittelwert einer Fehlerdrift schnell folgen, da neue reflektierte Signale stärker gewichtet werden als alte. Zum zweiten zeichnet sich der Mittelwert durch eine geringe Streuung aus, da insgesamt viele Signale zum Durchschnitt beitragen. Zum dritten ist eine solche Vergangenneitsbewertung einfach zu realisieren; der zuletzt berechnete Mittelwert bei einer bestimmten Frequenz $f$ wird zum Zeitpunkt des Wiederkehrens dieser Frequenz $f$ durch eine einfache rekursive Vorschrift erneuert. Diese Vorschrift wird im folgenden erläutert.

Der aktuelle mittlere Offsetwert $\overline{Re_{neu}(f)}$, $\overline{Im_{neu}(f)}$ (Re = Realteil, Im = Imaginärteil) bei der Frequenz $f$ errechnet sich zu einem großen Anteil aus dem letzten mittleren Offsetwert $\overline{Re_{alt}(f)}$, $\overline{Im_{alt}(f)}$ bei derselben Frequenz, addiert zu einem kleinen Anteil des neuen Abtastwertes $Re_{neu}(f)$, $Im_{neu}(f)$:

$$\overline{Re_{neu}(f)} = (1 - Z) \cdot \overline{Re_{alt}(f)} + Z \cdot Re_{neu}(f);$$

$$\overline{Im_{neu}(f)} = (1 - Z) \cdot \overline{Im_{alt}(f)} + Z \cdot Im_{neu}(f);$$

$$Z \ll 1.$$

In Figur 6 ist ein Schema für die Gesamtkalibrierung dargestellt. Dabei sind die Real- und Imaginäranteile für eine Frequenz $f$ angegeben. Im linken Teil dieser Figur ist die Offsetkorrektur 0 des aus den Mischerdioden ankommenden Signals durch Subtraktion der mittleren Offsetwerte symbolisiert.

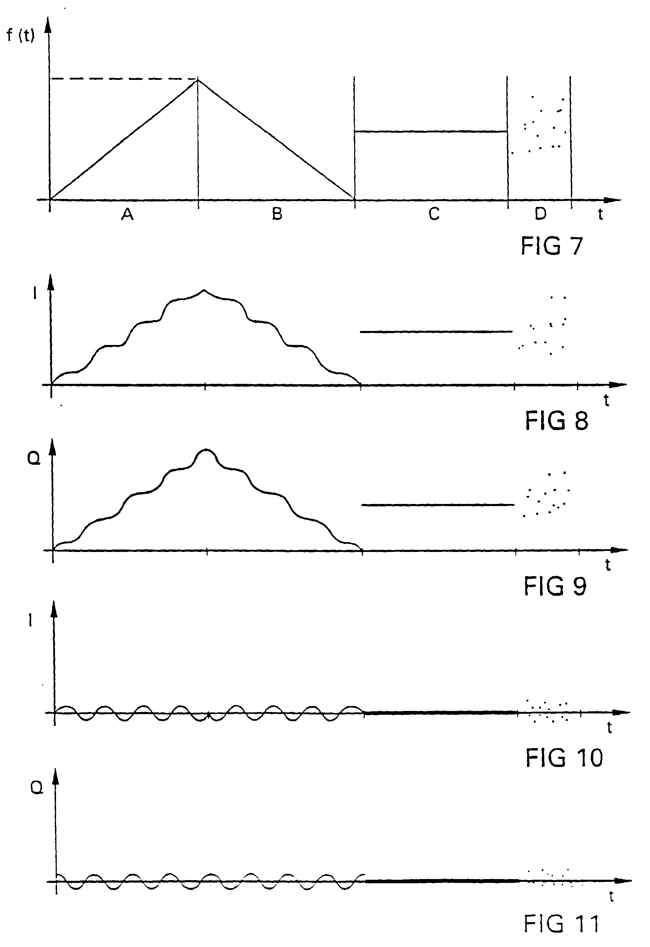

Die Figuren 7 bis 11 zeigen die Wirkung dieser Kalibrierung: Figur 7 zeigt nochmals den zeitlichen Frequenzverlauf in den Messungen A bis D der Figur 2. Von einem unbewegten Hindernis in beispielsweise 4 m Abstand liefert der Quadraturmischer 6 (s. Figur 1) ohne Kalibrierung die Signalverläufe gemäß den Figuren 8 und 9, dagegen mit dem beschriebenen Kalibrierverfahren gemäß den Figuren 10 und 11.

Die Aktualisierung der mittleren Offsetwerte durch die rekursive Berechungsvorschrift kann immer dann erfolgen, wenn ein bestimmter Frequenzwert (Burst) wiederkehrt. Die Dauer der Wiederkehr ist allerdings in der gewählten Modulationscharakteristik nach Figur 2 unterschiedlich. Daner wird als Aktualisierungsperiode $T_{Ak}$ die gesamte Meßzeit für die vier Einzelmessungen A - D (s. Figur 2) für die Auswertung eines Radarbildes gewählt, damit alle Frequenzen unter gleichen Bedingungen behandelt werden. Die Konstante Z muß entsprechend der gewünschten Zeitkonstante $\tau_{korr}$ für die exponentiell abklingende Vergangenheitsbewertung gewählt werden:

$$z = \frac{T_{Ak}}{\tau_{korr.}}$$

Beträgt beispielsweise die Gesamtmeßdauer der Radarauswertung 10 ms, so ergibt sich bei einer Rekursionszeitkonstanten von $\tau_{korr}$ = 10s der Wert Z = 0.001; d. h., der aktuelle mittlere Offsetfehler berechnet sich zu 99,9 % aus dem alten mittleren Offsetfehler addiert zu 0,1 % des aktuellen Empfangssignals.

Der Quadraturkomponentenfehler des Quadraturmischers 6 ist durch eine Amplituden- und eine Phasenfehlerkomponente charakterisiert.

Betrachtet man zunächst den Amplitudenfehler, so ist er durch unterschiedliche Ansprechempfindlichkeiten der Mischerdioden des Quadraturmischers 5 bei gleicher HF-Zuführleistung charakterisiert. Zur Korrektur des Amplitudenfehlers ist das Verhältnis B($f$) von Bedeutung, das den Quotienten aus den Betragsmittelwerten von Realteil und Imaginärteil nach Offsetkorrektur darstellt. Da die Größe B($f$) frequenzabhängig ist, wird sie wie bei der Offsetkorrektur für jede Frequenz im lautenden Empfangsbetrieb des Radarsystems bestimmt:

$$B(f) = \frac{\overline{|Re(f)|}}{\overline{|Im(f)|}}$$

Beide Betragsmittelwerte

$$\overline{|Re(f)|}, \quad \overline{|Im(f)|}$$

(Mittelwerte der Beträge) werden durch die oben erläuterte Methode der exponentiell abklingenden Vergangenheitsbewertung errechnet.

Zur Korrektur des Amplitudenfehlers wird der ermittelte Faktor B($f$) mit dem Imaginärteil Im(f) multipliziert (siehe Figur 6).

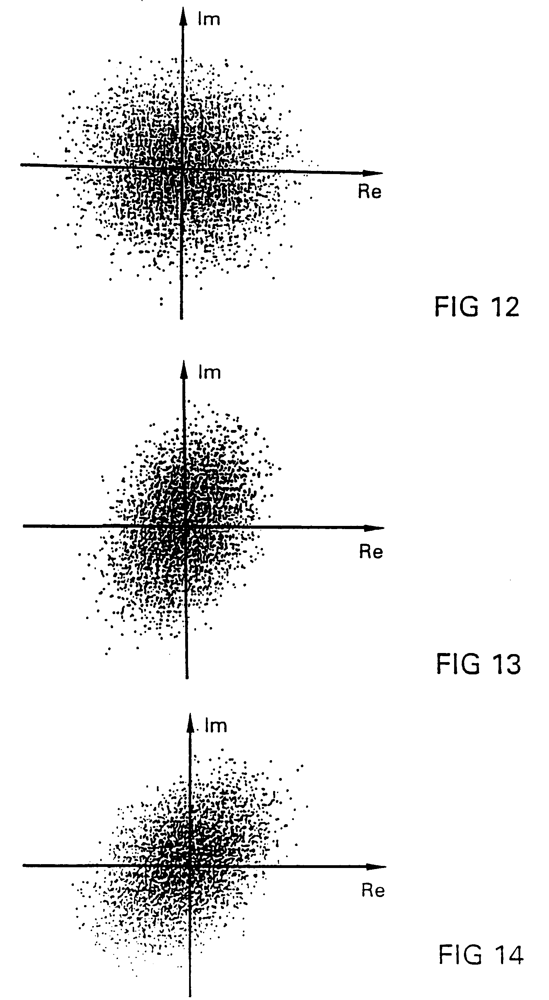

Nachdem der Amplitudenfehler der Quadraturkomponenten korrigiert wurde, verbleibt der Phasenfehler. Er gibt die Abweichung von dem Phasenwert 90° der beiden in die Mischer einzuspeisenden Signale an. Zur Auswirkung eines solchen Phasenfehlers soll die Darstellung in Figur 12 betrachtet werden:

In Figur 12 sind jeweils ca. 10000 Abtastwerte eines als Beispiel angenommenen Empfangssignals in Ortsdiagramme eingetragen. Dabei wurde immer nur Abtastwerte bezüglich einer bestimmten wiederkehrenden Frequenz gewählt. Unter der Voraussetzung, daß die Zielsituation nicht derart stationär ist, daß Abstände sich um weniger als einen Bruchteil einer HF-Wellenlänge (ca. 4 mm) innerhalb einiger Minuten verändern, weist eine größere Anzahl von Empfangssignalen immer einen stochastischen Charakter auf. Im Ortsdiagramm macht sich der stochastische Charakter in Form einer zweidimensionalen gaußschen Wolke bemerkbar; d. h. ein beliebiger Querschnitt einer solchen Wolke durch den Koordinatenursprung hindurch erzeugt eindimensional gesehen eine gaußsche Verteilungsdichtefunktion.

Das Diagramm nach Figur 12 zeigt eine konzentrische "Wolke", wie sie ohne Phasen- und Amplitudenfehler am Ausgang des Quadraturmischers 6 aussieht. Das Diagramm nach Bild 13 enthält das Ergebnis bei einem fehlerhaften Quadraturmischer. Man erkennt nach einer Langzeitbeobachtung die elliptische Ausprägung der Wolke mit zunächst beliebiger Richtungsachse, da hier Amplituden- und Phasenfehler vorliegen. Nach der oben beschriebenen Amplitudenkorrektur verbleiben die Phasenfehler; die elliptische Ausprägung liegt jetzt nur noch in 45-Grad-Richtung vor (s. Figur 14).

Da die Richtungsachse der Ellipse definitiv in 45-Grad-Richtung liegt, werden zur Beseitigung dieses Phasenfehlers sämtliche Empfangswerte um 45 Grad gedreht, so daß die elliptische Richtungsachse jetzt in 90-Grad-Richtung vorliegt. Diese Drenung erfolgt, wie in Figur 6 dargestellt, durch kreuzweise Addition bzw. Subtraktion der Quadraturkomponenten. Dabei wird zwar die Amplitude der Signale zusätzlich um $\sqrt{2}$ erhöht, aber diese Amplitudenveränderung wirkt sich nicht störend aus, sondern geht nur als Normierungskonstante in die Verarbeitung ein.

Nach der 45°-Drehung der Ellipse kann das Längen-Seiten-Verhältnis durch den Quotienten $\psi(f)$, welcher sich aus der Division des Betragsmittelwertes des Realteils durch den Betragsmittelwert des Imaginärteils ergibt, bestimmt werden. Dies aber entspricht derselben Vorgehensweise wie bei der Amplitudenkorrektur, da die Phasenfehler der Quadraturkomponenten durch die 45-Grad-Drehung zu Amplitudenfehlern geworden sind. Auch die Korrektur des Phasenfehlers erfolgt daher entsprechend der Amplitudenkorrektur durch Multiplikation des Imaginärteils mit dem Faktor $\psi(f)$ (s. Figur 6).

In Bild 6 sind alle Korrekturmaßnahmen des aus für die aus den A/D-Wandlern 7 und 8 kommenden Signals $y_n$ bis zum endgültigen, fast idealen Empfangssignal $Re_{korr}(f)$, $Im_{korr}(f)$ dargestellt. Es entsteht die Frage, ob und inwieweit sich die einzelnen Korrekturmaßnahmen gegenseitig beeinflussen oder sogar zu "Regel-schwingungen" führen.

Die Amplitudenkorrektur und die Phasenkorrektur der Quadraturkomponenten beeinflussen sich gegenseitig nicht, da sie zueinander orthogonal sind.

Die Offsetkorrektur und die Korrektur der Quadraturkomponenten können sich aber gegenseitig stören, weil z. B. ein noch nicht ausgeglichener Offsetfehler zu einer Verfälschung in der Amplitudenkorrektur führen kann. Daher wird die Zeitkonstante $\tau_{korr}$ bei der Offsetkorrektur etwa um den Faktor 10 niedriger ausgelegt als bei der Korrektur der Quadraturkomponentenfehler.

Die Erfindung betrifft also ein computerisiertes Radarverfahren zur Messung von Abständen und Relativgeschwindigkeiten zwischen einem Fahrzeug und mehreren vor ihm befindlichen Hindernissen, wobei eine sichere Unterscheidung zwischen tatsächlichen Hindernissen und Scheinhindernissen mit kurzer Auswertezeit durch vier Verfahrensschritte (A, B, C, D) erreicht wird. Wesentliches Merkmal der drei ersten Verfahrensschritte (A, B, C) ist die Aussendung jeweils frequenzkonstanter Bursts 20, die in einem Frequenz-Zeit-Diagramm eine linear ansteigende, eine linear abfallende sowie eine frequenzkonstante lineare Folge bilden. Am Ende jedes reflektierten Bursts, also bei eingeschwungener Phase, wird ein komplexer Abtastwert erfaßt, und in einem Relativgeschwindigkeits-Abstands-Diagramm werden potentielle Hindernisse als Schnittpunkte von Geraden erfaßt, die aus den reflektierten linearen Burstfolgen gewonnen sind. Mittels einer speziellen Korrelation erfolgt dann im Rechner eine Aussortierung von Geisterhindernissen, und nur die Empfangswerte für die verbleibenden Hindernisse werden weiter verarbeitet.

**Patentansprüche**

1.  Verfahren zum Steuern der Frequenzen einer Vielzahl von, von einem Radar gesendeten, Sendesignalen mittels eines Computers und zum interpretieren einer gleichen Vielzahl von reflektierten Signalen mittels eines Computers zur Messung von Abständen und Relativgeschwindigkeiten zwischen einem Fahrzeug und in Fahrtrichtung vor ihm befindlichen Hindernissen mit Aussendung mittels eines Computergesteuerten Oszillators erzeugter Sendesignale, Empfangen an den Hindernissen reflektierter Signale, Mischen der reflektierten Signale mit den Sendesignalen zur Gewinnung von Inphase- und Quadraturphasesignalen und Verarbeitung dieser Signale in dem Computer zu Ausgangssignalen für die Abstände und Relativgeschwindigkeiten der Hindernisse, dadurch gekennzeichnet, daß während einer ersten Messung der Oszillator im Sinne der Erzeugung zeitlich aufeinanderfolgender frequenzkonstanter Impulse mit in dieser Folge von einem Minimal- auf einen Maximalwert linear inkremental ansteigender Frequenz und mit durch die gewünschte Auflösung gegebener Anzahl durch den Computer angesteuert wird, daß danach während einer zweiten Messung der Oszillator im Sinne der Erzeugung entsprechender frequenzkonstanter Impulse mit von dem Maximalwert auf den Minimalwert linear inkremental abfallender Frequenz durch den Computer angesteuert wird wobei in beiden Messungen am Ende jedes reflektierten frequenzkonstanten Impulses ein komplexer Abtastwert erfaßt und durch Mischen mit den frequenzkonstanten Sendesignal-Impulsen erste bzw. zweite Inphase- und Quadraturphasesignale (erste bzw. zweite Empfangssignale) für die Abstände und die Relativgeschwindigkeiten gewonnen werden, daß danach während einer dritten Messung der Oszillator im Sinne der Erzeugung entsprechender, jedoch frequenzgleicher, frequenzkonstanter Impulse durch den Computer angesteuert wird und auch hier am Ende jedes reflektierten frequenzkonstanten Impulsen ein komplexer Abtastwert zur Gewinnung dritter Inphase- und Quadraturphasesignale (dritte Empfangssignale) für die Relativgeschwindigkeiten durch Mischen mit den frequenzkonstanten Sendesignal-Impulses erfaßt wird, daß alle Empfangssignale durch den Computer mittels Fourier-Transformation in relativgeschwindigkeits- und abstandsabhängige Frequenzwerte umgewandelt werden, die in einem Relativgeschwindigkeits-Abstands-Diagramm drei Scharen sich schneidender Geraden darstellen, deren Schnittpunkte potentielle Hindernisse wiedergeben, daß ferner zur Eliminierung von Geisterhindernissen während einer vierten Messung der Oszillator im Sinne der Erzeugung zeitlich aufeinanderfolgender frequenzkonstanter Impulse mit Frequenzen $f_n$ gemäß der Beziehung

$$f_n = f_T + f_{Inkr.} \cdot (A^n \bmod(P))$$

mit

n =         O...N - 1, worin N = P - 1 und P = Primzahl,
A =         natürliche Zahl, die für die jeweilige Länge N so gewählt ist, daß N unterschiedliche Koeffizienten entstehen,
$f_T$ =         Trägerfrequenz des Oszillators,
$f_{Inkr.}$ =         Frequenzinkrement,

durch den Computer angesteuert wird, ferner am Ende jedes - jeweils einem der Koeffizienten $(A^n \bmod(P))$ zugeordneten - reflektierten frequenzkonstanten Impulses als viertes Empfangssignal ein komplexer Abtastwert

$$y_n = \sum_i k_i \cdot e^{j\phi_{i;n}}$$

mit

i =         Zahl der Hindernisse,

$\phi_{i;n}$ =         $2\pi f_{Inkr.} \dfrac{R_i}{\frac{c}{2}}(A^n \bmod(P)) + 2\pi n \cdot \dfrac{v_i f_T}{\frac{c}{2} f_A}$ = eingeschwungener Phasenwert des Hindernisses i,

c =         Lichtgeschwindigkeit,
$R_i$ =         Entfernung des Hindernisses i;
$v_i$ =         Relativegeschwindigkeit des Hindernisses i,
$f_T$ =         Trägerfrequenz,
$f_A$ =         Abtastfrequenz,
$k_i$ =         Amplitude

durch den Computer erfaßt wird und durch den Computer ein Vergleich der den Hindernissen in der vierten Messung zugeordneten Phasen ($\phi_{i;n}$) mit den Phasen der Schnittpunkte im Relativgeschwindigkeits-Abstands-Diagramm erfolgt.

2.    Verfahren nach Anspruch 1, dadurch gekennzeichnet, daß für den Vergleich die Schnittpunkte zu einer Folge mit abnehmenden Reflexionsamplituden ($k_1$) geordnet werden, die konjugiert komplexe Phase des amplitudengrößten Schnittpunktes mit den vierten Empfangssignalen ($y_n$) gemäß der Funktion

$$W = \sum_{n=0}^{N-1} y_n \cdot e^{-j\phi_{i;n}}$$

korreliert wird, Schnittpunkte, deren so gewonnener Korrelationswert (W) unter einem vorgegebenen Wert liegt, als Geisterhindernisse aussortiert werden, dagegen iterativ jeweils nach Ermittlung eines Schnittpunktes mit hohem Korrelationswert (W) auf das zugehörige fiktive vierte Empfangssignal

$$\frac{W}{N} \cdot e^{j\phi;n}$$

rückgeschlossen und dieses von den Empfangssignalen ($y_n$) der vierten Messung subtrahiert wird.

3. Verfahren nach Anspruch 1 oder 2, dadurch gekennzeichnet, daß zur Eliminierung von in den Inphase- und Quadraturphasesignalen (I, Q) enthaltenen Sendesignalen ("Übersprechsignal") zunächst durch Mittelwertbildung aus empfangenen reflektierten Signalen bei allen durch die steuerspannung (f(t)) des Oszillators (1) gegebenen Frequenzen desselben das Übersprechsignal ermittelt und dann von den Inphase- und Quadraturphasesignalen (I, Q) subtrahiert wird.

4. Verfahren nach Anspruch 3, dadurch gekennzeichnet, daß eine gleitende Mittelwertbildung mit zeitlich exponentiell abklingender Vergangenheitsbewertung (w(t)) erfolgt.

5. Verfahren nach Anspruch 3 oder 4, dadurch gekennzeichnet, daß aktualisierte neue Übersprechsignale ($\overline{Re_{neu}(f)}$; $\overline{Im_{neu}(f)}$) bei einer vorgegebenen Frequenz rekursiv aus einem durch Mittelwertbildung ermittelten vorangegangenen Übersprechsignal ($\overline{Re_{alt}(f)}$, $\overline{Im_{alt}(f)}$) und einem Anteil eines neuen Übersprechsignals ($Re_{neu}(f)$), $Im_{neu}(f)$) ermittelt werden.

6. Verfahren nach Anspruch 1 oder 2 und einem der Ansprüchen 3 bis 5, dadurch gekennzeichnet, daß die Ermittlung der Übersprechsignale bei jedem frequenzkonstanten Impuls mit der vorgegebenen Frequenz erfolgt;

7. Verfahren nach Anspruch 1 oder 2 und den Ansprüchen 5 und 6, dadurch gekennzeichnet, daß als Aktualisierungsperiode die für die vier Messungen (A, B, C, D) erforderliche Meßzeit gewählt ist.

8. Verfahren nach einem der Ansprüche 1 bis 7, dadurch gekennzeichnet, daß zur Korrektur eines Quadraturkomponentenfehlers in den durch Mischen gewonnenen Inphase- und Quadraturphasesignalen (I, Q) zunächst ein Amplitudenfehleranteil dieses Fehlers durch eine Mittelwertbildung der Beträge dieser beiden Signale (I, Q) - ggf. nach Eliminierung des Übersprechfehlers - und danach ein Phasenfehleranteil des Quadraturfehlers durch Phasendrehung von Inphase- und Quadraturphasesignalen (I, Q) beseitigt wird.

9. Verfahren nach Anspruch 8, dadurch gekennzeichnet, daß eine gleitende Mittelwertbildung mit zeitlich exponentiell abklingender Vergangenheitsbewertung (w(t)) erfolgt.

10. Verfahren nach Anspruch 8 oder 9, dadurch gekennzeichnet, daß aktualisierte neue Betragswerte bei einer vorgegebenen Frequenz rekursiv aus durch Mittelwertbildung ermittelten Betragswerten und einem Anteil des Betrages eines neuen Inphase- und Quadraturphasesignals (I, Q) - ggf. nach Eliminierung des Übersprechfehlers - ermittelt werden.

11. Verfahren nach einem der Ansprüche 8 bis 10, dadurch gekennzeichnet, daß der Quotient aus den Betragsmittelwerten von Inphase- und Quadraturphasesignalen (I, Q) mit dem Quadraturphasesignal (Q) - ggf. nach Eliminierung des Übersprechfehlers - multipliziert wird.

12. Verfahren nach einem der Ansprüche 8 bis 11, dadurch gekennzeichnet, daß zur Beseitigung des Phasenfehleranteils eine Phasendrehung um 45° durch kreuzweise Addition bzw. Subtraktion zwischen den Inphase- und Quadraturphasesignalen erfolgt, an die sich eine Multiplikation des Quadraturphasesignals (Q) mit dem Quotienten aus den Betragsmittelwerten von Inphase- und Quadraturphasesignalen (I, Q) anschließt.

13. Verfahren nach einem der Ansprüche 3 bis 12 mit Eliminierung des Übersprechsignals und Korrektur des Quadraturkomponentenfehlers, dadurch gekennzeichnet, daß die Korrektur mit kleinerer zeitkonstante als die Eliminierung erfolgt.

**Claims**

1. A Method for controlling the frequencies of a plurality of radar sent transmitted signals by means of a computer and to interpret an equal number of reflected signals by means of a computer to measure the distances and relative velocities between a vehicle and obstacles in the direction of motion of it by radiating transmission signals produced by a computer controlled oscillator, receiving the signals reflected by the obstacles, mixing of the reflected signals with the transmitted signals to obtain in-phase and quadrature-phase signals and processing thereof in the computer to obtain output signals for the distances and relative velocities of the obstacles, characterized in that

during a first measurement the oscillator is controlled by the computer in the sense of generating time-wise sequential frequency constant pulses (bursts) within this sequence linear incremental increasing frequency of the pulses from a minimum to a maximum value and with a number of pulses given by the desired resolution, thereupon during a second measurement the oscillator is controlled by the computer in the sense of generating corresponding frequency constant pulses with frequencies which are linear incremental decreased from a maximum value to a minimum value,

wherein in both measurements at the end of each reflected frequency constant pulse a complex sample value is acquired and by mixing with the frequency constant transmission signal pulses first and second inphase and quadrature-phase signals (first and second reception signals) for the distances and the relative velocities are obtained,

then during a third measurement the oscillator is controlled by the computer in the sense of generating corresponding, but with equal frequency, frequency constant pulses and that once again at the end of each reflected frequency constant pulse a complex sample value is acquired to obtain third in-phase and quadrature-phase signals (third reception signals) for the relative velocities by mixing with the frequency constant transmission signal pulses,

all reception signals are transformed by the computer and by means of a Fourier transformation into relative velocities and distance dependent frequency values, which in a relative velocity vs distance diagram represent three groups of intersecting straight lines, where the intersecting points represent potential obstacles,

furthermore to eliminate "ghost-like obstacles" the oscillator is controlled by a computer during a fourth measurement in the sense of generating time-wise sequential frequency constant pulses with frequencies $f_n$ according to the relation

$$f_n = f_T + f_{inc.} \cdot (A^n \bmod(P)), \text{ where}$$

$n =$        $0...N-1$, wherein $N = P-1$ and $P =$ prime number

$A =$        natural number, which is chosen for the respective length $N$ such that $N$ different coefficients are produced,

$f_T =$        carrier frequency of the oscillator,

$f_{Inc.} =$        frequency increment,

further at the end of each reflected frequency constant pulse - respectively associated to one of the coefficients $(A^n \bmod(P))$ - a complex sample value

$$y_n = \sum_i k_i \cdot e^{j\phi_{i;n}}$$

with

$i =$        number of obstacles,

$\phi_{i;n} =$        $2\pi f_{Inkr.} \dfrac{R_i}{\frac{c}{2}}(A^n \bmod(P)) + 2\pi n \cdot \dfrac{v_i f_T}{\frac{c}{2} f_A} =$ steady state phase value of the obstacle i,

$c =$        velocity of light

$R_i =$        distance to obstacle i;

$v_i =$ relative velocity of the obstacle i,

$f_T =$ carrier frequency,

$f_A =$ sample frequency,

$k_i =$ amplitude

is acquired by means of a computer as a fourth reception signal and by means of the computer a comparison is been made of the phases ($\phi_{i;n}$) associated to the obstacles in the fourth measurement with the phases of the intersecting points in the relative velocity vs distance diagram.

2. Method according to claim 1, characterized in that

the comparison of the intersecting points are ordered in a sequence with decreasing reflection amplitudes ($k_i$), the conjugated complex phase of the intersecting point with the biggest amplitude is being correlated with the fourth reception signal ($y_n$) according to the function,

$$W = \sum_{n=0}^{N-1} y_n \cdot e^{-j\phi i;n}$$

intersecting points, whose in such manner gained correlation values (W) lie under a predetermined value, are discarded as "ghost-like" obstacles,

whereas after a respective determination of an intersecting point with a high correlation value (W) it is iteratively back-deduced to which reception signal

$$\frac{W}{N} \cdot e^{j\phi i;n}$$

it belongs and this corresponding reception signal is being subtracted from the reception signals ($y_n$) of the fourth measurement.

3. Method according to claim 1 or 2, characterized in that

for the elimination of transmission signals ("cross-talk signal") contained in the in-phase and quadrature-phase signals (I, Q) first of all the transmission signal (cross-talk signal) is being determined by averaging the received reflected signals by all frequencies given by the control voltage (f(t)) of the oscillator (1) and then by subtracting it from the in-phase and quadrature-phase signals (I, Q).

4. Method according to claim 3, characterized in that a sliding average with a time-wise exponentially decaying history evaluation (w(t)) takes place.

5. Method according to claim 3 or 4, characterized in that updated new cross-talk signals (Re $_{new}$ (*f*); Im $_{new}$ (*f*)) for a pre-signed frequency are determined recursively from a previous cross-talk signal (Re $_{old}$ (*f*); Im $_{old}$ (*f*)), determined by averaging, and a portion of a new cross-talk signal (Re $_{new}$ (*f*), Im $_{new}$ (f)).

6. Method according to claim 1 or 2 and one of the claims 3 to 5 characterized in that the determination of the cross-talk signals takes place at each frequency constant pulse with the pre-determined frequency.

7. Method according to claims 1 or 2 and the claims 5 and 6, characterized in that the updating period is taken to be the measurement time that is neccessary for the four measurements. (A, B, C, D)

8. Method according to one of the claims 1 to 7 characterized in that for the correction of a quadrature-component error in the by mixing gained in-phase and quadrature-phase signals (I, Q) first of all an amplitude error part of this error is being eliminated by averaging the absolute values of these two signals (I, Q) - if necessary after elimination of cross-talk errors - and then a phase error part of the quadrature error is eliminated by phase rotation of the in-phase and quadrature-phase signals (I, Q).

9. Method according to claim 8 characterized in that a sliding average takes place with time-wise exponentially decaying history evaluation (w(t)).

10. Method according to claims 8 or 9 characterized in that the updated new values with a pre-given frequency are determined recursively from averaged values and from a contribution of the value of the new in-phase or quadrature-phase signal (I, Q) - if necessary after elimination of the cross-talk error -.

11. Method according to claims 8 to 10 characterized in that the ratio of the averaged values of the in-phase and quadrature-phase signals (I, Q) is multiplied with the quadrature-phase signal (Q) - if necessary after elimination of the cross-talk error.

12. Method according to one of the claims 8 to 11 characterized in that for elimination of the phase error part a phase rotation by 45° takes place by cross-wise addition or subtraction between the in-phase or quadrature-phase signals followed by a multiplication of the quadrature-phase signal (Q) with the ratio of the averaged values of the inphase and quadrature-phase signals (I, Q).

13. Method according to one of the claims 3 to 12 with elimination of the cross-talk signal and correction of the quadrature-component error, characterized in that the correction takes place with a smaller time constant than the elimination.

## Revendications

1. Procédé pour commander, au moyen d'un ordinateur, les fréquences d'une pluralité de signaux d'émission émis par un radar et pour interpréter, au moyen d'un ordinateur, une pluralité identique de signaux réfléchis, pour la mesure de distances et de vitesses relatives entre un véhicule et des obstacles qui se trouvent devant lui dans le sens de la marche, comportant émission de signaux d'émission produits au moyen d'un oscillateur commandé par un ordinateur, réception de signaux réfléchis sur les obstacles, mélange des signaux réfléchis avec les signaux d'émission pour obtenir des signaux en phase et des signaux en quadrature de phase et traitement de ces signaux dans l'ordinateur pour obtenir des signaux de sortie pour les distances et les vitesses relatives des obstacles, caractérisé par le fait que, pendant une première mesure, l'oscillateur est commandé par l'ordinateur pour donner des impulsions, à fréquence constante de succession dans le temps au sens de l'invention, de fréquence croissant linéairement par incrément dans cette succession pour passer d'une valeur minimale à une valeur maximale et en nombre donné pour la résolution désirée, qu'ensuite, pendant une seconde mesure, l'oscillateur est commandé par l'ordinateur pour donner des impulsions, à fréquence constante de succession dans le temps au sens de l'invention, de fréquence décroissant linéairement par incrément pour passer de la valeur maximale à la valeur minimale, étant précisé que dans les deux mesures, à la fin de chaque impulsion, à fréquence constante de succession dans le temps, réfléchie, une valeur de balayage complexe est saisie et que, par mélange avec des impulsions du signal d'émission à fréquence constante de succession dans le temps, des premiers ou des seconds signaux en phase et en quadrature de phase (premiers ou seconds signaux de réception) pour les distances et les vitesses relatives sont obtenus, qu'ensuite, pendant une troisième mesure, l'oscillateur est commandé par l'ordinateur pour donner des impulsions correspondantes, à fréquence constante de succession dans le temps au sens de l'invention, mais de même fréquence et qu'ici aussi à la fin de chaque impulsion, à fréquence constante de succession dans le temps, réfléchie, une valeur de balayage complexe est saisie pour donner des troisièmes signaux en phase et en quadrature de phase (troisièmes signaux de réception) pour les vitesses relatives par mélange avec les impulsions du signal d'émission à fréquence constante de succession dans le temps, que tous les signaux de réception sont convertis, par l'ordinateur, au moyen d'une transformation de Fourier, en valeurs de fréquence fonctions de la vitesse relative et de la distance, qui, sur un diagramme vitesse relative-distance représentent trois faisceaux de droite s'intersectant dont les points d'intersection reproduisent les obstacles potentiels, qu'en outre, pour éliminer les obstacles fantômes, pendant une quatrième mesure, l'oscillateur est commandé par l'ordinateur pour donner des impulsions à fréquence constante de succession dans le temps, au sens de l'invention, de fréquences $f_n$ selon la relation

$$f_n = f_T + f_{Inkr.} \cdot (A^n \bmod (P))$$

avec

n = O...N-1, avec N = P - 1  et P = nombre premier,

A = nombre naturel, choisi pour la longueur respective N pour faire apparaître N coefficients différents,

$f_T$ = fréqunece porteuse de l'oscillateur

$f_{Inkr.}$ = incrément de fréquence,

qu'en outre à la fin de chaque impulsion à fréquence constante de succession dans le temps, réfléchie, - associée chaque fois à l'un des coefficients ($A^n$mod (P)) est saisie par l'ordinateur, comme quatrième signal de réception, une valeur de balayage complexe

$$y_n = \sum_i k_i \cdot e^{j\phi i;n}$$

avec

i = nombre d'obstacles,

$$\phi i;n = 2\pi f_{Inkr.} \frac{R_i}{\frac{c}{2}}(A^n \bmod(P)) + 2\pi n \cdot \frac{v_i f_T}{\frac{c}{2} f_A} = \text{valeur de phase de l'obstacle i en régime permanent,}$$

c = Vitesse de la lumière

$R_i$ = Distance de l'obstacle i ;

$v_i$ = Vitesse relative de l'obstacle i,

$f_T$ = fréquence porteuse

$f_A$ = fréquence de balayage

$k_i$ = amplitude

et que l'ordinateur procède à une comparaison des phases ($\phi_{i;n}$) associées aux obstacles dans la quatrième mesure avec les phases des points d'intersection sur le diagramme vitesse relative-distance.

2. Procédé selon la revendication 1, caractérisé par le fait que, pour la comparaison, les points d'intersection sont ordonnés pour donner une suite d'amplitudes de réflexion ($k_i$) décroissantes ; que la phase complexe conjuguée du point d'intersection de plus grande amplitude est corrélée avec les quatrièmes signaux de réception ($y_n$) selon la fonction

$$W = \sum_{n=0}^{N-1} y_n \cdot e^{-j\phi i;n}$$

que des points d'intersection dont la valeur de corrélation (W) ainsi obtenue est inférieure à une valeur prescrite sont éliminés en tant qu'obstacles fantômes, que par contre, en mode itératif, après chaque détermination d'un point d'intersection à valeur de corrélation (W) élevée, on en déduit le quatrième signal de réception fictif correspondant

$$\frac{W}{N} \cdot e^{j\phi i;n}$$

et on le soustrait des signaux de réception ($y_n$) de la quatrième mesure.

3. Procédé selon la revendication 1 ou 2, caractérisé par le fait que pour éliminer des signaux d'émission ( « signal de diaphonie » ) contenus dans les signaux en phase et en quadrature de phase (I, Q), on détermine tout d'abord le signal de diaphonie par formation de la moyenne à partir des signaux réfléchis reçus pour toutes les fréquences de l'oscillateur prescrites par la tension de commande (f(t)) de l'oscillateur (1) et qu'on le soustrait des signaux en phase et en quadraturé de phase (I, Q).

4. Procédé selon la revendication 3, caractérisé par le fait que l'on procède à la formation d'une moyenne glissante avec une correction (w(t) basée sur l'historique et décroissant exponentiellement en fonction du temps.

**5.** Procédé selon la revendication 3 ou 4, caractérisé par le fait que, pour une fréquence prescrite, on détermine de nouveaux signaux, actualisés, de diaphonie ($Re_{neu}$ (f) ; $Im_{neu}$(f)) en mode récursif, à partir d'un signal de diaphonie précédent ($Re_{alt}$ (f), $Im_{alt}$ (f)) déterminé par formation d'une moyenne et d'une composante d'un nouveau signal de diaphonie ($Re_{neu}$ (f) ; $Im_{neu}$ (f)).

**6.** Procédé selon la revendication 1 ou 2 et l'une des revendications 3 à 5, caractérisé par le fait que la détermination des signaux de diaphonie se fait pour chaque impulsion, à fréquence constante de succession dans le temps, à la fréquence prescrite.

**7.** Procédé selon la revendication 1 ou 2 et les revendications 5 et 6, caractérisé par le fait que comme période d'actualisation c'est le temps de mesure nécessaire pour les quatre mesures (A, B, C, D) qui est choisi.

**8.** Procédé selon l'une des revendications 1 à 7, caractérisé par le fait que pour corriger une erreur sur la composante en quadrature de phase dans les signaux en phase et en quadrature de phase (I, Q) obtenus par mélange, on élimine tout d'abord une composante de cette erreur constituant l'erreur sur l'amplitude par formation de la moyenne des valeurs absolues de ces deux signaux (I, Q) - éventuellement après élimination de l'erreur de diaphonie - et qu'ensuite on élimine une composante de cette erreur constituant l'erreur de phase par rotation de phase des signaux en phase et en quadrature de phase (I, Q).

**9.** Procédé selon la revendication 8, caractérisé par le fait que l'on procède à la formation d'une moyenne glissante avec une correction (w(t), basée sur l'historique et décroissant exponentiellement en fonction du temps.

**10.** Procédé selon la revendication 8 ou 9, caractérisé par le fait que, pour une fréquence prescrite, on détermine de nouvelles valeurs absolues actualisées en mode récursif à partir de valeurs absolues déterminées par formation de la moyenne et à partir d'une composante de la valeur absolue d'un nouveau signal en phase et en quadrature de phase (I, Q) - éventuellement après élimination de l'erreur de diaphonie.

**11.** Procédé selon l'une des revendications 8 à 10, caractérisé par le fait que l'on multiplie le quotient des moyennes des valeurs absolues des signaux en phase et en quadrature de phase (I, Q) par le signal en quadrature de phase (Q) - éventuellement après élimination de l'erreur de diaphonie.

**12.** Procédé selon l'une des revendications 8 à 11, caractérisé par le fait que éliminer la composante constituant l'erreur de phase il se fait une rotation de phase de 45° par addition ou soustraction en croix entre les signaux en phase et en quadrature de phase, rotation qui suit une multiplication du signal en quadrature de phase (Q) par le quotient des valeurs absolues moyennes des signaux en phase et en quadrature de phase (I, Q).

**13.** Procédé selon l'une des revendications 3 à 12, avec élimination du signal de diaphonie et correction de l'erreur constituant la composante de quadrature, caractérisé par le fait que la correction se fait avec une constante de temps inférieure à celle de l'élimination.

FIG 1

FIG 2

FIG 3

FIG 4

FIG 5

FIG 6

FIG 7

FIG 8

FIG 9

FIG 10

FIG 11

**FIG 12**

**FIG 13**

**FIG 14**